# EUROPEAN PATENT SPECIFICATION

(11) **EP 1 898 141 B1**
(45) Date of publication and mention of the grant of the patent: **09.09.2009**
(21) Application number: 07015263.2
(22) Date of filing: 03.08.2007
(51) Int. Cl.: F16L 39/00

(54) **Conical sealing sheath for pipes for conveying fluids and installation methods thereof**
Konische Verschlusshülle für Röhren zur Förderung von Flüssigkeiten und Installationsverfahren dafür
Gaine d'étanchéité conique pour tubes de transport de liquides et méthode d'installation d'une telle gaine

(30) Priority: 05.09.2006 IT MI20061690
(43) Date of publication of application: 12.03.2008
(73) Proprietor: Stampa Tecnica Articoli Materiali Plastici- S.T.A.M.P. S.P.A., 20064 Pozzuolo Martesana (MI) (IT)
(72) Inventor: Guerini, Carlo c/o S.T.A.M.P. S.P.A., 20060 Pozzuolo Martesana (Milano) (IT)
(74) Representative: Inzaghi, Alberto

(56) References cited:
- GB-A- 1 161 407
- US-A- 5 186 215
- US-A- 5 431 459

## Description

The present invention refers to a conical sheath adapted to seal the space present between the inner tube and the outer tube of a fluid conveying pipe.

Fluid conveying pipes normally consist of an inner pipe (preferably) of steel or of a plastic material, inserted inside an outer pipe (preferably) of steel or of concrete: the inner pipe is kept raised with respect to the outer pipe by means of a plurality of spacers, which are applied to the outer surface of the inner pipe before it is inserted inside the outer pipe.

The inner pipe is normally eccentric with respect to the outer pipe; the axis of symmetry of the inner pipe is generally lower than that of the outer pipe.

A fluid conveying pipe is normally buried underground: the outer pipe serves to protect the inner pipe both mechanically (by preventing it from being damaged by the loads applied to the inner pipe, for example by the weight of a vehicle travelling over the buried pipe where it is crossed by a road or by a railway) and cathodically, by insulating the inner pipe electrically from the surrounding environment to prevent it from being subject to stray current corrosion phenomena.

Because of the presence of the spacers, a space is left between the inner pipe and the outer pipe, which is partially occupied by the spacers and into which damp soil and/or water penetrate (or can penetrate), destroying (at least partially) the cathodic protection effect exerted by the outer pipe.

To overcome this serious drawback, when a fluid conveying pipe is laid it is common practice to seal said space by means of conical sheaths which are fitted over the inner pipe and the terminal part of the outer pipe.

Sheaths of heat-shrinkable material to be applied hot and sheaths made of rubber (or other equivalent material) to be applied cold are known to the art.

A sheath of heat-shrinkable material is installed by heating with a torch (or with another equivalent means) at least the two ends of the sheath to make them adhere to the outer pipe and to the inner pipe, respectively: the installation of the sheath is difficult and must be done by skilled personnel since there is a risk of burning and/or of puncturing the sheath during the heating and it is not easy to make the sheath adhere perfectly to inner pipe whilst maintaining the eccentricity thereof.

Furthermore - when installed - said sheath is taut: it is therefore easily subject to breaking if it is stressed by a load (for example, by a stone and/or by the weight of the earth covering the pipe) and it is not able to absorb the stress due to movements of the ground and/or to the thermal dilation of the inner pipe.

Prefabricated rubber sheaths are easier to install but do not allow a great eccentricity of the inner pipe with respect to the outer pipe and are fixed on the two pipes by means of stainless steel bands, which are tight and are not well regarded because they are not insulating; often during the burial, the sheaths come off at least one pipe, defeating the sealing effect.

To overcome at least partially the abovementioned drawbacks, rubber sheaths have been realised in which the intermediate area (situated between the two areas to be made to adhere to the inner pipe and to the outer one respectively) is bellows-shaped.

It is also known from document GB 1161407 a conical seal in an apparatus for repairing pipes comprising spaced inflatable plugs which are adapted to make sealing engagement with the pipe, pump mea is, consisting of a conical, inflatable bag 4 which is expandible progressively from one end of the space 6 between the plugs and adjacent one of the plugs to fill the pipe and form a shuttering on the inside wall of the pipe over at least part of the space 6, and conduits 7 for passage into and out of the space lor grouting or other settable sealing material. No pullers are disclosed for putting the seal on place.

Object of the present invention is to provide a conical sealing sheath adapted to be installed and replaced simply and cheaply and that is in any case devoid of the flaws and of the limitations previously describe for the sheaths of the prior art.

This object is achieved by means of a sheath realised according to the present invention that has the characterising features illustrated in claim 1 and that is adapted to be installed by the method illustrated in claim 8.

Further advantageous characteristics of the invention form the subject matter of the dependent claims.

Further characteristics of the invention will be made clearer by the detailed description that follows, referring to purely exemplifying - and therefore non limiting - embodiments thereof, illustrated in the appended figures, in which:
- Figure 1 shows diagrammatically, open, a sheath according to the invention comprising closing means and means adapted to fit and to secure the sheath to the inner pipe and to the outside one;
- Figure 2 shows diagrammatically a top view of the sheath of Figure 1, closed, a section thereof along the plane A-A and an enlarged detail of said section;
- Figure 3 is similar to Figure 1 and shows diagrammatically, open, a further embodiment of a sheath according to the invention;
- Figure 4 is similar to Figure 2b and shows diagrammatically a sectional view of the sheath of Figure 3, closed, and an enlarged detail of said section;
- Figures 5 to 8 show diagrammatically a sequence of steps able to illustrate the method of installing the sheaths described in Figures 1 and 2 and in Figures 3 and 4, respectively.

In the appended figures, like elements will be identified by means of the same reference numerals.

A conical sealing sheath, realised according to the invention, consists of a body shaped as a sector of a circle on which are fixed pullers which allow the sheath to be fitted on the inner and on the outer pipes of the fluid conveying pipe and to be secured to said pipes, preferably by taping; the edges of the body in the shape of a sector of a circle, brought together, are fixed at least by means of a longitudinal strip glued to the abovementioned edges.

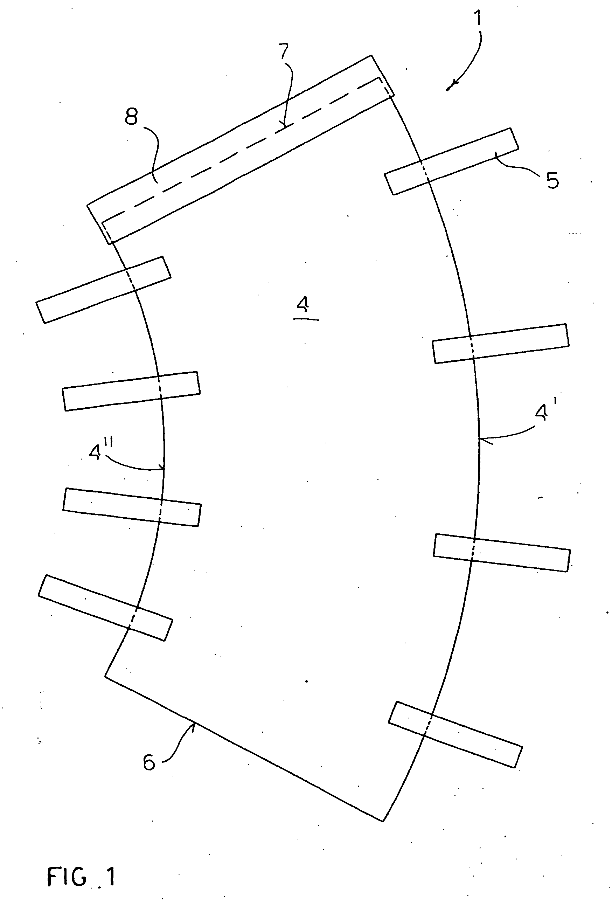

Figure 1 shows diagrammatically, open, a conical sheath 1 realised according to the invention, which comprises a body 4 shaped as a sector of a circle delimited by a first arc of a circle 4' having a length greater than the outside circumference of the outer pipe 3 and by a second arc of a circle 4" having a length (about) equal to (and in any case not greater than) the outside circumference of the inner pipe 2.

Applied to the body 4 are the longitudinal closing strip 8 placed at one of the edges (6, 7) of the body 4 and the pullers 5, which allow the sheath 1 to be fitted on the inner and on the outer pipes (2, 3) of the fluid conveying pipes and to be secured to said pipes, preferably by taping.

For the sake of simplicity of the graphic representation, only one of the pullers 5 has been designated with the corresponding reference numeral in Figure 1.

The body 4 in the shape of a sector of a circle, the pullers 5 and the closing strip 8 are advantageously made of the same material, preferably a rubberised fabric of the type used to make the rubber dinghies; the pullers 5 and the closing strip 8 are glued to the body 4 by means of one of the commercially available glues normally used to make and/or to repair the rubber dinghies.

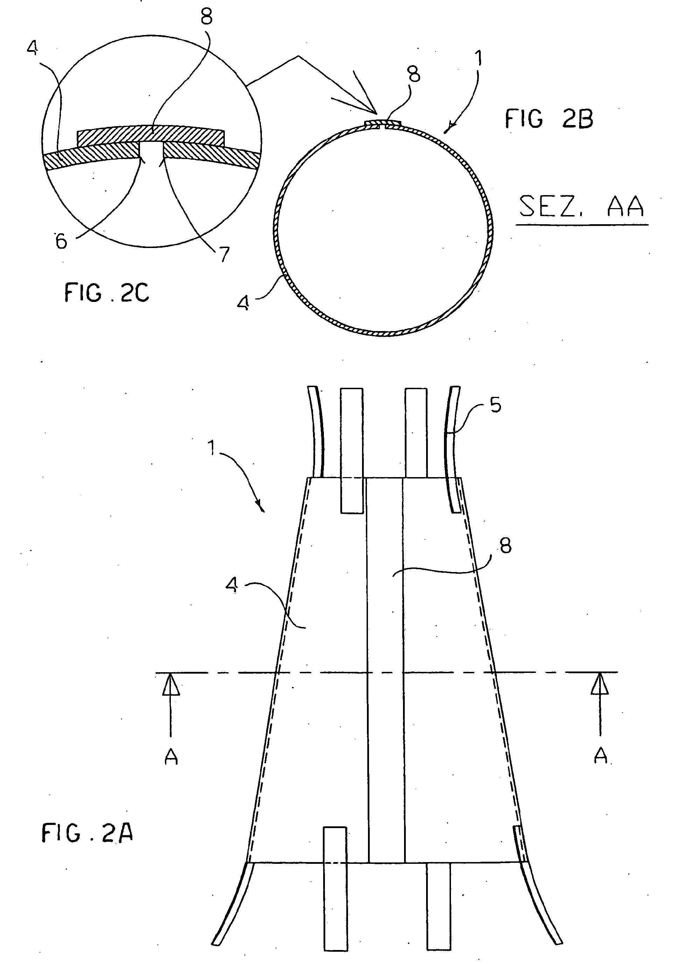

Figure 2 shows diagrammatically a top view of the sheath 1 of Figure 1 closed (Figure 2a), the sheath 1 sectioned along the plane A-A (Figure 2b) and an enlarged detail of said section (Figure 2c).

As can be seen from Figure 2, in particular from Figures 2b and 2c, to realise the conical sheath 1 the edges (6, 7) of the body 4 - bearing the pullers 5 - are brought together and secured by means of the longitudinal closing strip 8.

For the sake of simplicity of the graphic representation, only one of the pullers 5 has been designated with the corresponding reference numeral in Figure 2.

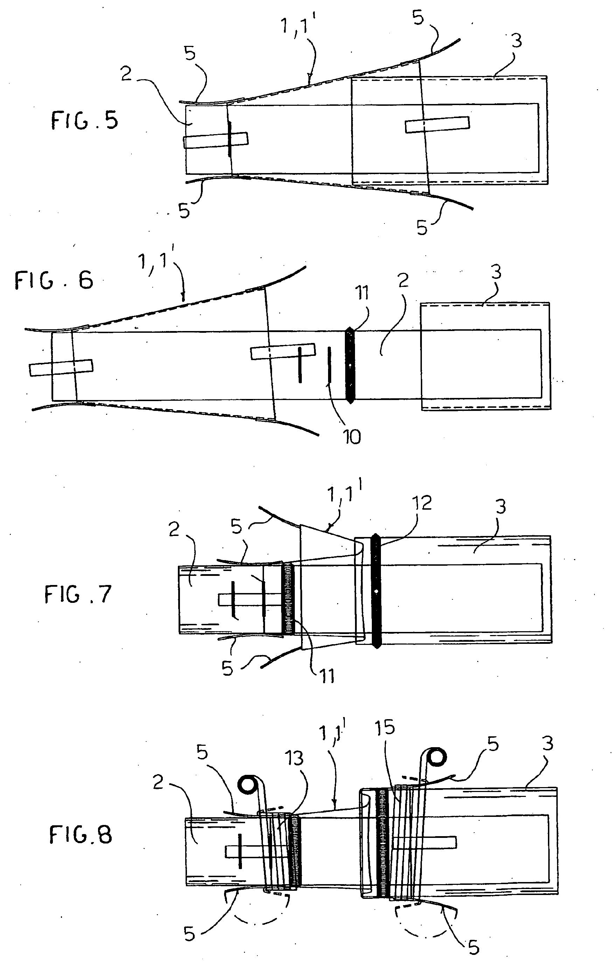

The method of installing the sheath 1 will be described hereunder with reference to Figures 5 to 8.

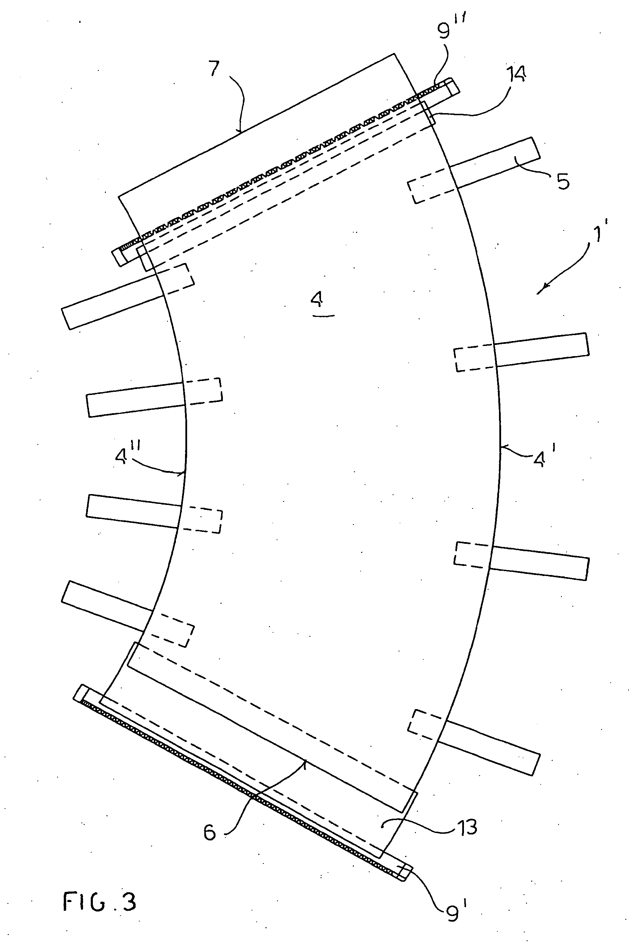

Figure 3 shows diagrammatically, open, a bottom view of a further embodiment 1' of a sheath realised according to the invention, which differs from that illustrated in Figures 1 and 2 essentially in that it comprises a zip fastener 9, preferably of plastic material, the elements (9', 9") of which are carried by a first longitudinal element 13 glued to the body 4 and protruding with respect to a first edge of the body 4 and by a second longitudinal element 14 glued to the body 4 and set back with respect to the second edge of the body 4, respectively.

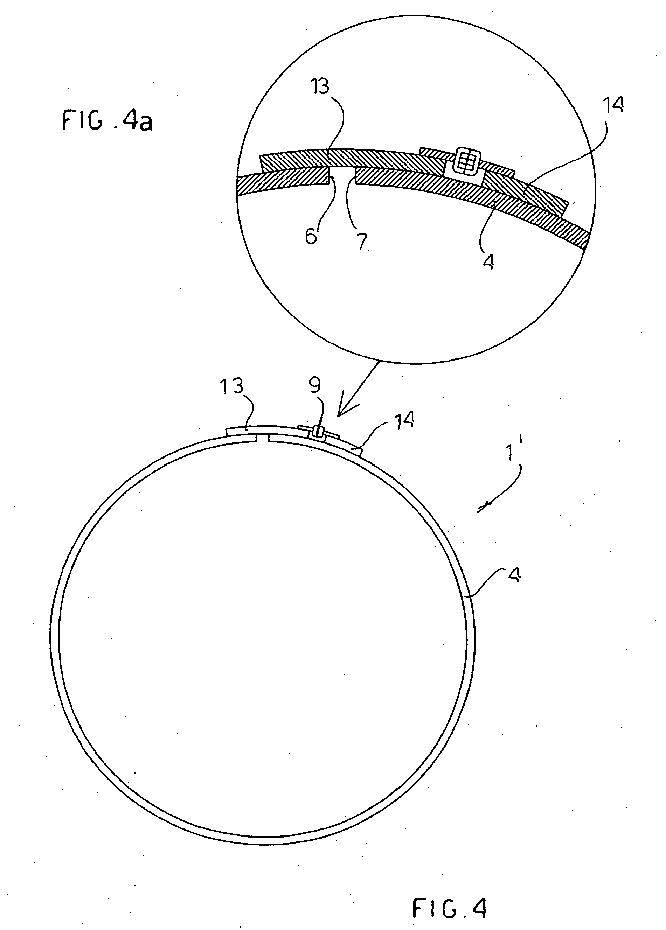

In the Figures 3 and 4 the first longitudinal element 13 protrudes with respect to the edge 6 of the body 4 and the second longitudinal element 14 is set back with respect to the edge 7 of the body 4 but, without departing from the scope of the invention, the first longitudinal element 13 can protrude with respect to the edge 7 of the body 4 and the second longitudinal element 14 can be set back with respect to the edge 6 of the body 4.

The sheath 1' is advantageously used to replace an existing sheath since it can be wrapped around the inner pipe 2 in place of the sheath to be replaced, closed by means of the zip fastener 9 and of the first longitudinal element 13 glued to the body 4 in the area adjacent the second edge (7, 6) and installed as will be described hereunder with reference to Figures 5 to 8.

Figure 4 is similar to Figure 2b and shows diagrammatically a sectional view of the sheath 1' of Figure 3, closed by means of the zip fastener 9 and of the first longitudinal element 13 glued to the body 4 in the area adjacent the edge 6, and an enlarged detail of said section; the body 4 and the zip fastener 9 carried by the longitudinal elements 14 and 13, glued to the body 4 in the area adjacent the second edge (7, 6), can be seen in Figure 4.

Figures 5 to 8 show diagrammatically a sequence of steps able to illustrate the method of installing the sheath 1 (Figures 1 and 2), and the sheath 1' (Figures 3 and 4), respectively, which comprises at least the steps of
- if the sheath is a sheath 1' comprising a zip fastener 9, wrapping the sheath 1' around the inner pipe 2 (stage 1), applying a glue to the first longitudinal element 13 or to the second edge (7, 6), closing the zip fastener 9 and pressing the first longitudinal element 13 onto the body 4 in the area adjacent the second edge (7, 6; stage 2); otherwise slipping the sheath 1 onto the inner pipe 2 (stage 3);
- having slipped the sheath (1, 1') onto the inner pipe 2 (stage 3), sliding it along the inner pipe 2 (by means of the pullers 5) until it fits the outer pipe 3 and fitting it over the outer pipe 3 (stage 4; Figure 5);
- marking on the inner pipe 2 the position reached by the sheath (1, 1'), removing (or turning back over itself) the sheath to expose the inner pipe 2 and marking thereon a further reference mark 10 at a pre-set distance (for example: 6-8 cm) from the position previously reached by the sheath and marked on the inner pipe 2 (stage 5; Figure 6);
- possibly forming on the inner pipe 2 a first bead of adhesive 11 to coincide with the further reference mark10 (stage 6; Figure 6);
- slipping the sheath (1, 1') over the inner pipe 2 again up to the further reference mark 10 and turning the larger diameter part of the sheath (1, 1') back on itself up to the further reference mark 10 (stage 7; Figure 7);
- possibly forming on the outer pipe 3 a second bend of adhesive 12 at a pre-set distance (for example: 3-4 cm) from the end of the outer pipe 3 (stage 8; Figure 7);
- stretching the sheath (1, 1') on the outer pipe 3 by means of the pullers 5 and sliding manually the excess part of the sheath (1, 1') into the space between the outer pipe 3 and the inner pipe 2 (stage 9; Figure 7);
- securing the pullers 5 to the inner pipe 2, and to the outer pipe 3, respectively, by winding an adhesive tape from the sheath (1, 1') up to about halfway along the pullers 5 (stage 10; Figure 8);
- folding back the free past of the pullers 5 over the taped area 15 and securing it by further taping (stage 11; Figure 8).

The fact that the sheath (1, 1') is secured to the inner pipe 2, and to the outer pipe 3 respectively, by wrapping the adhesive tape around it a number of times improves the hydraulic and pneumatic seal of said sheath; the beads of adhesive 11 and/or 12 possibly formed on the inner pipe 2 and/or on the outer one 3 improve the hydraulic seal of the sheath (1, 1') preventing moisture from entering the space between the outer pipe 3 and the inner pipe 2.

## Claims

1. A conical sealing sheath (1, 1') for fluid conveying pipes, **characterised in that** it consists of a body (4) shaped as a sector of a circle, **in that** on the body (4) are fixed pullers (5) to fit the sheath (1, 1') on the inner and on the outer pipes (2, 3) of the fluid conveying pipe and to secure it to said pipes (2, 3) and **in that** the edges (6, 7) of the body (4) are brought together and secured at least by means of a longitudinal strip (8, 13) fixed to said edges (6, 7).

2. A conical sheath (1, 1') as in claim 1, **characterised in that** the body (4) shaped as a sector of a circle is delimited by a first arc of a circle (4') having a length not less than the outside circumference of the outer pipe (3) and a by a second arc of a circle (4") having a length not greater than the outside circumference of the inner pipe (2).

3. A conical sheath (1, 1') as in claim 1, **characterised in that** the body (4), the pullers (5) and the closing strip (8) are made of the same material.

4. A conical sheath (1, 1') as in claim 3, **characterised in that** the body (4), the pullers (5) and the closing strip (8) are made of rubberised fabric.

5. A conical sheath (1, 1') as in claim 1, **characterised in that** the pullers (5) and the closing strip (8) are fixed to the body (4) by gluing.

6. A conical sheath (1') as in claim 1, **characterised in that** it further comprises a zip fastener (9) whose elements (9', 9") are carried by a first longitudinal element (13) glued to the body (4) and protruding with respect to a first edge (6, 7) of the body (4), and by a second longitudinal element (14) glued to the body (4) and set back with respect to the second edge (7, 6) of the body (4).

7. A conical sheath (1') as in claim 6, **characterised in that** the zip fastener (9) is made of plastic material.

8. A method of installing a sheath (1, 1') according to at least one of the preceding claims, **characterised in that** it comprises at least the steps of:
- slipping the sheath (1, 1') onto the inner pipe (2; stage 3), sliding it along the inner pipe (2) by means of the pullers (5) until it fits the outer pipe (3) and fitting it over the outer pipe (3; stage 4);
- marking on the inner pipe (2) the position reached by the sheath (1, 1'), exposing the inner pipe (2) and marking thereon a further reference mark (10) at a pre-set distance from the position previously reached by the sheath (1, 1'; stage 5);
- slipping the sheath (1, 1') over the inner pipe (2) again up to the further reference mark (10) and turning the larger diameter part of the sheath (1, 1') back on itself up to the further reference mark (10; stage 7);
- stretching the sheath (1, 1') on the outer pipe (3) by means of the pullers (5), and inserting the excess part of the sheath (1, 1') into the space between the outer pipe (3) and the inner pipe (2; stage 9);
- securing the pullers (5) to the inner pipe (2) and to the outer pipe (3) by wrapping an adhesive tape from the sheath (1, 1') up to a pre-set point of the pullers (5; stage 10);
- folding back the free part of the pullers (5) onto the taped area (15) and securing it by further taping (stage 11).

9. A method as in claim 8, **characterised in that** the inner pipe (2) is exposes (stage 5) by removing the sheath (1, 1') from said pipe.

10. A method as in claim 8, **characterised in that** the inner pipe (2) is exposes (stage 5) by turning the sheath (1, 1') back on itself.

11. A method as in claim 8, **characterised in that** the further reference mark (10) is made at a distance of 6-8 cm from the position previously reached by the sheath (1, 1'; stage 5).

12. A method as in claim 8, **characterised in that** the adhesive tape is wrapped (stage 10) up to halfway along the length of the pullers (5).

13. A method as in claim 8, **characterised in that** it comprises at least the further step of realising on the inner pipe (2) a first bead of adhesive (11) to correspond with the further reference mark (10; stage 6) before sliding the sheath (1, 1') over the inner pipe (2) again (stage 7).

14. A method as in claim 8, **characterised in that** it comprises at least the further step of forming on the outer pipe (3) a second bead of adhesive (12) at a pre-set distance from the end of the outer pipe (3; stage 8) before stretching the sheath (1, 1') on the outer pipe (3) by means of the pullers (5; stage 9).

15. A method as in claim 14, **characterised in that** the second bead of adhesive (12) is formed at a distance of 3-4 cm from the end of the outer pipe (3).

16. A method as in claim 8 for installing a sheath (1') as in claim 6, **characterised in that** it comprises at least the further steps of wrapping the sheath (1') around the inner pipe (2; stage 1), applying a glue to the body (4) of the sheath (1'), closing the zip fastener (9) and pressing the first longitudinal element (13) onto the body (4) in the area adjacent the second edge (7, 6; stage 2).

17. A method as in claim 16, **characterised in that** the glue is applied to the body (4) of the sheath (1') by applying it to the first longitudinal element (13).

18. A method as in claim 16, **characterised in that** the glue is applied to the body (4) of the sheath (1') by applying it to the second edge (7, 6) of the body (4).

## Patentansprüche

1. Konische Dichtungshülle (1, 1') für flüssigkeitsführende Leitungen, **dadurch gekennzeichnet, dass** sie aus einem als ein Kreisausschnitt geformtem Körper (4) besteht, dass auf dem Körper (4) Abziehvorrichtungen (5) zum Aufziehen der Hülle (1, 1') auf die Innen und Außenleitungen (2, 3) der flüssigkeitsführenden Leitungen und zur Sicherung derselben an diesen Leitungen (2, 3) befestigt sind und dass die Kanten (6, 7) des Körpers (4) mindestens durch einen auf diesen Kanten (6, 7) befestigten Längsstreifen (8, 13) zusammengefügt und gesichert sind.

2. Konische Dichtungshülle (1, 1') nach Anspruch 1, **dadurch gekennzeichnet, dass** der als ein Kreisausschnitt geformte Körper (4) durch einen ersten Kreisbogen (4') von einer nicht unter dem Außenumfang der Außenleitung (3) liegenden Länge und durch einen zweiten Kreisbogen (4") von einer nicht über dem Außenumfang der Innenleitung (2) liegenden Länge begrenzt wird.

3. Konische Dichtungshülle (1, 1') nach Anspruch 1, **dadurch gekennzeichnet, dass** der Körper (4), die Abziehvorrichtungen (5) und der Verschlussstreifen (8) aus demselben Material gefertigt sind.

4. Konische Dichtungshülle (1, 1') nach Anspruch 3, **dadurch gekennzeichnet, dass** der Körper (4), die Abziehvorrichtungen (5) und der Verschlussstreifen (8) aus gummiertem Gewebe gefertigt sind.

5. Konische Dichtungshülle (1, 1') nach Anspruch 1 **dadurch gekennzeichnet, dass** die Abziehvorrichtungen (5) und der Verschlussstreifen (8) durch ein Aufklebeverfahren auf dem Körper (4) befestigt sind.

6. Konische Hülle (1') nach Anspruch 1, **dadurch gekennzeichnet, dass** sie weiterhin einen Reißverschluss (9) umfasst, dessen Elemente (9, 9') durch ein erstes, auf den Körper (4) verklebtes Längselement (13), das bezüglich einer ersten Kante (6, 7) des Körpers (4) hervorsteht und ein zweites, auf den Körper verklebtes und bezüglich der zweiten Kante (7, 6) des Körpers (4) zurückgesetztes Längselement getragen werden.

7. Konische Hülle (1') nach Anspruch 6, **dadurch gekennzeichnet, dass** der Reißverschluss (9) aus Kunststoff gefertigt ist.

8. Verfahren zur Montage einer Hülle (1, 1') nach wenigstens einem der vorangehenden Ansprüche, **dadurch gekennzeichnet, dass** es mindestens die folgenden Schritte umfasst:
- Gleiten der Hülle (1, 1') auf die Innenleitung (2; Stufe 3), Verschieben der Hülle mittels der Abziehvorrichtungen (5) entlang der Innenleitung (2), bis er sich in die Außenleitung (3) einpasst und Aufziehen auf die Außenleitung (3; Stufe 4);
- Markierung der von der Hülle (1, 1') erreichten Position auf der Innenleitung (2), Freilegung der Innenleitung (2) und Markierung einer weiteren Bezugsmarke (10) auf derselben unter Einhaltung eines vorgegebenen Abstands zur zuvor von der Hülle (1, 1', Stufe 5) erreichten Position;
- Erneutes Gleiten der Hülle (1, 1') über die Innenleitung (2) bis zur weiteren Bezugsmarke (10) und Zurückbiegung des breiteren Durchmesserteils der Hülle (1, 1') über sich selbst bis zur weiteren Bezugsmarke (10; Stufe 7);
- Dehnen der Hülle (1, 1') über die Außenleitung (3) mittels der Abziehvorrichtungen (5) und Einsatz des überschüssigen Teils der Hülle (1, 1') in den zwischen der Außenleitung (3) und der Innenleitung (2; Stufe 9) bestehenden Freiraum;
- Sicherung der Abziehvorrichtungen (5) an der Innenleitung (2) und an der Außenleitung (3) durch das Umwickeln mit einem Klebeband von der Hülle (1, 1') bis zu einem vorgegebenen Punkt der Abziehvorrichtungen (5; Stufe 10);
- Zurückbiegen des frei liegenden Teils der Abziehvorrichtungen (5) über den überklebten Bereich (15) und Sicherung dessen durch weiteres Umwickeln (Stufe 11).

9. Verfahren nach Anspruch 8, **dadurch gekennzeichnet, dass** die Innenleitung (2) durch die Entfernung der Hülle (1, 1') von dieser Leitung freigelegt ist (Stufe 5).

10. Verfahren nach Anspruch 8, **dadurch gekennzeichnet, dass** die Innenleitung (2)durch das Zurückbiegen der Hülle (1, 1') über sich selbst freigelegt ist (Stufe 5).

11. Verfahren nach Anspruch 8, **dadurch gekennzeichnet, dass** die weitere Bezugsmarke (10) im Abstand von 6 - 8 cm von der zuvor von der Hülle (1, 1'; Stufe 5) erreichten Position angebracht ist.

12. Verfahren nach Anspruch 8, **dadurch gekennzeichnet, dass** das Klebeband (Stufe 10) zur Hälfte über die Länge der Abziehvorrichtungen (5) gewickelt ist.

13. Verfahren nach Anspruch 8, **dadurch gekennzeichnet, dass** es mindestens den weiteren Schritt umfasst, der die Anbringung eines ersten Kleberwulsts (11) an der Innenleitung (2) in Übereinstimmung mit der weiteren Bezugsmarke (10; Stufe 6) vorsieht, bevor die Hülle (1, 1') erneut (Stufe 7) über die Innenleitung (2) schiebt.

14. Verfahren nach Anspruch 8, **dadurch gekennzeichnet, dass** es mindestens den weiteren Schritt umfasst, der die Erstellung eines zweiten Kleberwulsts (12) an der Außenleitung (3) in vorgegebenem Abstand vom Ende der Außenleitung (3; Stufe 8) vorsieht, bevor die Hülle (1, 1') durch die Abziehvorrichtung (5; Stufe 9) über die Außenleitung (3) gedehnt wird.

15. Verfahren nach Anspruch 14, **dadurch gekennzeichnet, dass** der zweite Kleberwulst (12) im Abstand von 3 - 4 cm vom Ende der Außenleitung (3) erstellt wird.

16. Verfahren nach Anspruch 8 zur Montage einer Hülle (1') nach Anspruch 6, **dadurch gekennzeichnet, dass** es mindestens die weiteren Schritte umfasst: Wickeln der Hülle (1') um die Innenleitung (2; Stufe 1), Anbringung eines Klebstoffs auf dem Körper (4) der Hülle (1'), Schließung des Reißverschlusses (9) und Anpressen des ersten Längselements (13) auf den Körper (4) im an die zweite Kante (7, 6; Stufe 2) angrenzenden Bereich.

17. Verfahren nach Anspruch 16, **gekennzeichnet durch** die Anbringung des Klebstoffs auf dem Körper (4) der Hülle (1') **durch** dessen Anbringung auf das erste Längselement (13).

18. Verfahren nach Anspruch 16, **gekennzeichnet durch** die Anbringung des Klebstoffs auf dem Körper (4) der Hülle (1') **durch** dessen Anbringung auf die zweite Kante (7, 6) des Körpers (4).

## Revendications

1. Gaine d'étanchéité conique (1, 1') pour les conduits de transport de fluide, **caractérisée en ce qu'**elle consiste en un corps (4) en forme d'un secteur de cercle, **en ce que** (4) des pullers (5) sont fixés sur le corps pour poser la gaine (1, 1') sur les conduits intérieurs et extérieurs (2, 3) du conduit de fluide et pour l'attacher auxdits conduits (2, 3), et **en ce que** les bords (6, 7) du corps (4) sont rassemblés et attachés au moins par une bande longitudinale (8, 13) fixée sur ces bords (6, 7).

2. Gaine conique (1, 1') selon la revendication 1, **caractérisée en ce que** le corps (4) en forme d'un secteur de cercle est délimité par un premier arc de cercle (4'), dont la longueur n'est pas inférieure à la circonférence extérieure du conduit extérieur (3) et par un deuxième arc de cercle (4''), dont la longueur n'est pas supérieure à la circonférence extérieure du conduit intérieur (2).

3. Gaine conique (1, 1') selon la revendication 1, **caractérisée en ce que** le corps (4), les pullers (5) et la bande de fermeture (8) sont faits de la même matière.

4. Gaine conique (1, 1') selon la revendication 3, **caractérisée en ce que** le corps (4), les pullers (5) et la bande de fermeture (8) sont faits en tissu caoutchouté.

5. Gaine conique (1, 1') selon la revendication 1, **caractérisée en ce que** les pullers (5) et la bande de fermeture (8) sont fixés au corps (4) par collage.

6. Gaine conique (1') selon la revendication 1, **caractérisée en ce qu'**elle comprend également une fermeture zippée (9), dont les éléments (9', 9'') sont portés par un premier élément longitudinal (13) collé au corps (4) et en saillie par rapport à un premier bord (6, 7) du corps (4), et par un deuxième élément longitudinal (14) collé au corps (4) et en retrait par rapport au deuxième bord (7, 6) du corps (4).

7. Gaine conique (1') selon la revendication 6, **caractérisée en ce que** la fermeture zippée (9) est fait en plastique.

8. Méthode pour l'installation d'une gaine (1, 1') selon au moins l'une des revendications précédentes, **caractérisée en ce qu'**elle comprend au moins les étapes suivantes :
- faire glisser la gaine (1, 1') sur le conduit intérieur (2 ; stade 3), la faire coulisser le long du conduit intérieur (2) au moyen des pullers (5) jusqu'à l'adapter au conduit extérieur (3), puis la poser sur le conduit extérieur (3 ; stade 4) ;
- signaler dans le conduit intérieur (2) la position atteinte par la gaine (1, 1'), découvrir le conduit intérieur (2) et apposer un autre repère (10) à une distance prédéterminée de la position atteinte auparavant par la gaine (1, 1' ; stade 5) ;
- refaire glisser la gaine (1, 1') sur le conduit intérieur jusqu'à l'autre repère (10) et replier sur elle-même la partie de la gaine (1, 1') ayant le diamètre plus important jusqu'à l'autre repère (10 ; stade 7) ;
- tendre la gaine (1, 1') sur le conduit extérieur (3) au moyen des pullers (5) et mettre l'excès de la gaine (1, 1') dans l'espace entre le conduit extérieur (3) et le conduit intérieur (2 ; stade 9) ;
- attacher les pullers (5) au conduit intérieur (2) et au conduit extérieur (3) en appliquant un papier adhésif sur la gaine (1, 1') jusqu'à un point prédéterminé des pullers (5 ; stade 10) ;
- replier la partie dégagée des pullers (5) sur la zone contenant le papier adhésif (15) et l'attacher avec un autre papier adhésif (stade 11).

9. Méthode selon la revendication 8, **caractérisée en ce que** le conduit intérieur (2) est découvert (stade 5) en retirant la gaine (1, 1') dudit conduit.

10. Méthode selon la revendication 8, **caractérisée en ce que** le conduit intérieur (2) est découvert (stade 5) en repliant la gaine (1, 1') sur elle-même.

11. Méthode selon la revendication 8, **caractérisée en ce que** l'autre repère (10) se trouve à une distance de 6-8 cm de la position atteinte auparavant par la gaine (1,1' ; stade 5).

12. Méthode selon la revendication 8, **caractérisée en ce que** le papier adhésif recouvre (stade 10) la moitié de la longueur des pullers (5).

13. Méthode selon la revendication 8, **caractérisée en ce qu'**elle comprend au moins l'étape supplémentaire de faire un premier cordon d'adhésif (11) sur le conduit intérieur (2) au niveau de l'autre repère (10 ; stade 6) avant de refaire glisser la gaine (1, 1') sur le conduit intérieur (2) (stade 7).

14. Méthode selon la revendication 8, **caractérisée en ce qu'**elle comprend au moins l'étape supplémentaire de faire un deuxième cordon de papier adhésif (12) sur le conduit extérieur (3) à une distance prédéterminée de la fin du conduit extérieur (3 ; stade 8) avant de tendre la gaine (1, 1') sur le conduit extérieur (3) au moyen des pullers (5 ; stade 9).

15. Méthode selon la revendication 14, **caractérisée en ce que** le deuxième cordon de papier adhésif (12) se situe à une distance de 3-4 cm de la fin du conduit extérieur (3).

16. Méthode selon la revendication 8 pour l'installation d'une gaine (1') selon la revendication 6, **caractérisée en ce qu'**elle comprend au moins les étapes supplémentaires de poser la gaine (1') autour du conduit intérieur (2 ; stade 1), d'appliquer une colle sur le corps (4) de la gaine (1'), d'activer la fermeture zippée (9) et de garder appuyer le premier élément longitudinal (13) sur le corps (4) dans la région adjacente au deuxième bord (7, 6 ; stade 2).

17. Méthode selon la revendication 16, **caractérisée en ce que** la colle est appliquée sur le corps (4) de la gaine (1') en la posant sur le premier élément longitudinal (13).

18. Méthode selon la revendication 16, **caractérisée en ce que** la colle est appliquée sur le corps (4) de la gaine (1') en la posant sur le deuxième bord (7, 6) du corps (4).
